(19) Europäisches Patentamt
European Patent Office
Office européen des brevets

(11) **EP 1 810 939 A1**

(12) **EUROPEAN PATENT APPLICATION**

(43) Date of publication:
**25.07.2007 Bulletin 2007/30**

(51) Int Cl.:
***B65G 1/20*** *(2006.01)*        ***B65D 19/44*** *(2006.01)*

(21) Application number: **06100759.7**

(22) Date of filing: **24.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **H.M.Z. Belgium**
**3800 Sint-Truiden (BE)**

(72) Inventor: **Vloemans, Eric**
**2250 Olen (BE)**

(74) Representative: **Leherte, Georges M.L.M. et al**
**Gevers & Vander Haeghen,**
**Holidaystraat 5**
**1831 Diegem (BE)**

(54) **Method and device for positioning and supporting essentially flat piece goods in a mutually separated manner**

(57) The invention relates to means (1), as well as to a method and device, for positioning and supporting essentially flat piece goods (2) in essentially vertical position in a mutually separated manner, by sequentially positioning said goods on a transport and/or storing surface and suitably interposing separating and/or supporting means between said successive essentially flat piece goods, whereas a separating and supporting means (3), in intermediate position, of a series of successive actionable separating and supporting means each involving one rest position (3rp), one intermediate position (3ip) and one separating/supporting position (3sp), is brought into its separating/supporting position providing lateral separation and/or support between successive essentially vertically positioned essentially flat piece goods, and in doing so automatically brings a next separating and supporting means of said series of separating and supporting means, from its rest position into its intermediate position.

*F i g . 3*

EP 1 810 939 A1

**Description**

The invention relates to the area of handling (storing and/or transporting) essentially flat piece goods, such as in particular essentially flat body parts for automotive vehicles.
The most important requirements in this business area involve the fastest possible "automatable" (i.e. capable of being automatized and/or robotized) positioning of the goods in the smallest possible space, with the minimal risk of damaging the goods during handling and transporting.

Many different techniques have been developed for meeting such requirements.
A commonly used technique involves positioning and supporting the essentially flat piece goods in a mutually separated manner, in view of their transport and/or storing, by sequentially positioning said goods on a transport and/or storing surface and suitably interposing separating and/or supporting means between said successive goods. Such separating and/or supporting means can consist of protective pieces separately (by hand or with robots) interposed between the successive goods or involve complex and expensive mechanisms for automatically deploying separating and/or supporting pieces (fingers / arms) during the positioning of the goods.

It is the objective of the present invention to provide an improved technology which avoids the many drawbacks of the known techniques and allows simple, reliable and easily automatable handling mechanisms and methods.

To reach this objective the invention provides a method for positioning and supporting essentially flat piece goods in a mutually separated manner, in view of their transport and/or storing, which method involves sequentially positioning said goods on a transport and/or storing surface and suitably interposing separating and/or supporting means between said successive essentially flat piece goods, whereby essentially flat piece goods comprising at least one projection are positioned in essentially vertical direction, whereas when positioning each such flat piece good on said transport and/or storing surface said at least one projection cooperates with a separating and supporting means, in intermediate position, of a series of successive actionable separating and supporting means each involving one rest position, one intermediate position and one separating/supporting position, and brings said separating and supporting means in intermediate position into its separating/supporting position providing lateral separation and/or support between successive essentially vertically positioned essentially flat piece goods, and in doing so automatically brings a next separating and supporting means of said series of separating and supporting means, from its rest position into its intermediate position.

The invention also specifically provides a new device for positioning and supporting essentially flat piece goods in a mutually separated manner in essentially vertical position on a support surface, in view of their transport and/or storing, comprising separating and/or supporting means capable to be interposed between said successive flat goods to provide lateral support to such essentially vertically positioned flat goods, wherein said separating and/or supporting means comprise a series of successive actionable separating and supporting means, each involving one rest position, one intermediate position and one separating/supporting position, with said successive actionable separating and supporting means interconnecting in such way that actuating a separating and supporting means of said series of successive separating and supporting means, being first in line in intermediate position, towards its separating/supporting position, automatically brings a separating and supporting means of said series of successive separating and supporting means, being next in line in rest position, from its rest position into its intermediate position.

The invention specifically provides automatically actionable means, applicable in such a method and device, for laterally supporting and/or separating successive piece goods comprising a plurality of successively actionable, mutually interconnecting arms, wherein said plurality of arms are hingedly provided around a common axis, each arm comprising a first side (A) and a second side (B), with side (A) of each arm facing side (B) of an adjoining arm, and each side (A) comprising at least one abutment cooperating with at least one abutment of each side (B) at an angle θfr of mutually free rotation of two successive arms with respect to each other around said common hinging axis, beyond which further rotation of the arm causes the rotation of a facing arm, whereas each arm comprises a rest position and a separating/supporting position at an angle θsp from said rest position, and an intermediate position at an angle θip = θsp - θfr from said rest position.

According to a preferred embodiment of the invention each first side (A) of the automatically actionable means as referred to here above may suitably comprise two abutments at a mutual angle α around said common hinging axis of said arms and each second side (B) may suitably comprise two abutments at a mutual angle β around said common hinging axis of said arms, whereas the difference α - β defines the angle of mutually free rotation θfr of two successive arms with respect to each other beyond which further rotation of the arm causes the rotation of a facing arm.

According to an even more specific embodiment of the invention the angle θ fr of mutually free rotation of two successive arms with respect to each other may appropriately be "substantially" (i.e. grossly) half of the angle θsp between the rest position and the separating/supporting position.

The concept of the new technology according to the invention can be summarised as follows :

The part (P) is loaded manually or automatically (robot).

It is moved until it touches a finger in ready-position (p1), then it is dropped or moved downward, moving the ready finger to the closed position (p2), and at the same time bringing the next finger from open-position (p0) into ready-position (p1).

The weight of the part keeps the closed finger closed and the ready-finger in ready-position. The ready finger prevents the part of moving or falling in the unload direction.

To unload, one has to move the part (P) upward, bringing the finger in front of the part in open position (due to the action of a spring, counterweight or other), allowing the part (P) to be unloaded, and meanwhile bringing the finger underneath the part in ready-position, preventing the next part (P-1) of moving or falling in the unload-direction.

Two fingers next to each other can only rotate independently over a certain angle, which can for instance very appropriately be half of the total angle between open and closed position.

Further features and details of the invention, as well as further advantages and application possibilities thereof will appear from the following description of a specific embodiment of the invention and from the figures corresponding thereto, in which

Figures 1 - 4    show successive stages in the positioning of a first (fig.1-3) and a second (fig. 4) flat piece good on a device involving automatically actionable means according to the invention for laterally supporting and/or separating such goods;

Figures 5 - 6    show a first side (A) and a second side (B) of the mutually interconnecting arms involved in the automatically actionable means for laterally supporting and/or separating goods, according to figures 1-4.

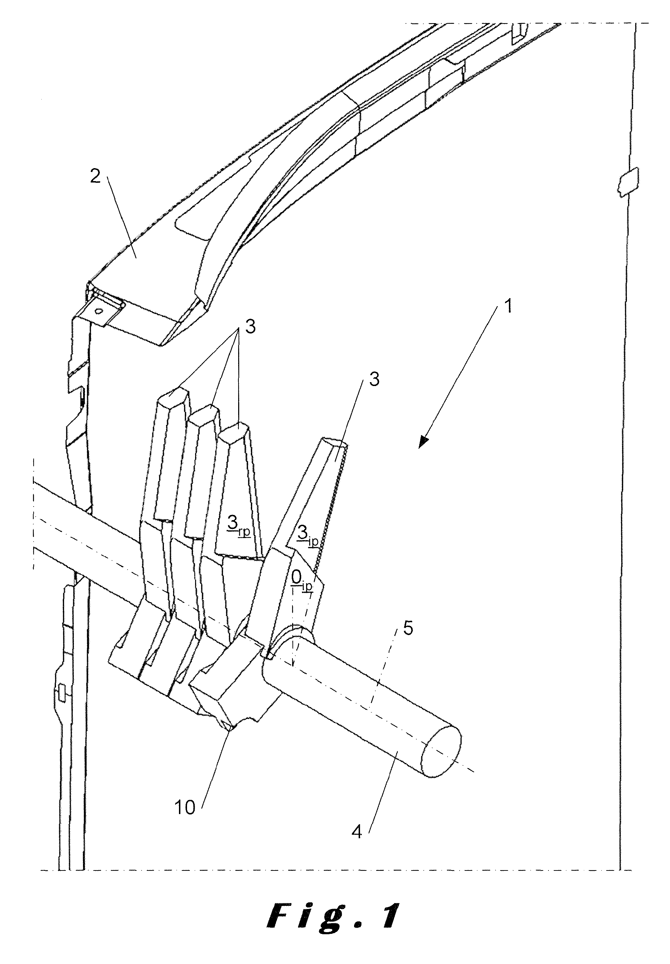

The method according to this embodiment of the invention, and the device therefor, as generally illustrated in the figures 1-6, involve automatically actionable means (designated as a whole by reference numeral -1-) for laterally supporting and/or separating essentially flat piece goods (2).

The automatically actionable means 1 involve a plurality of successively actionable, mutually interconnecting arms (3), hingedly provided on a common shaft (4) centred around a common axis (5).

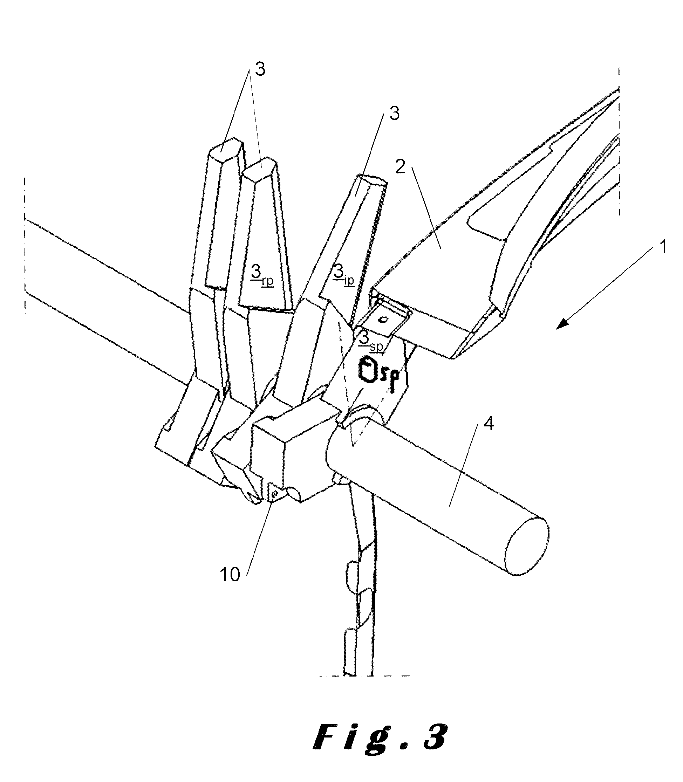

Each arm involves a rest position (3rp), a separating/supporting position (3sp), as shown in figures 3-4, and an intermediate position (3ip), where the separating/supporting position 3sp is at an angle $\theta$sp from the rest position 3rp, and the intermediate position 3ip at an angle $\theta$ip from the rest position.

The successive arms 3 are interconnecting in such way that each arm can rotate freely with respect to the next arm over an angle $\theta$fr of free rotation of two successive arms (actually from the position 3rp to the position 3ip), beyond which angle $\theta$fr further rotation of the arm (from position 3rp to position 3sp) causes the rotation of said next arm (from position 3rp to position 3ip).

Thus the angles $\theta$ip , $\theta$sp and $\theta$fr are linked to each other by the relation

$$\theta ip = \theta sp - \theta fr$$

The automatic rotation of a "next" arm from rest position 3rp to intermediate position 3ip, when rotating a "previous" arm from intermediate position 3ip to separating/supporting position 3sp is caused by the interaction of cooperating abutments on the facing sides of two successive arms.

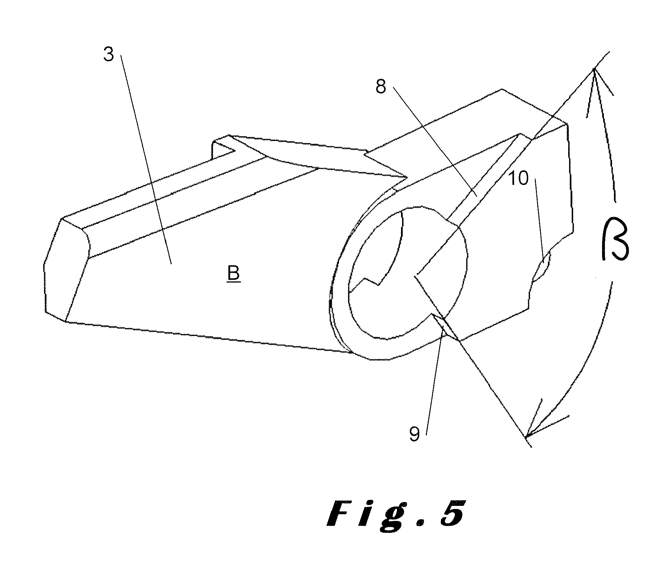

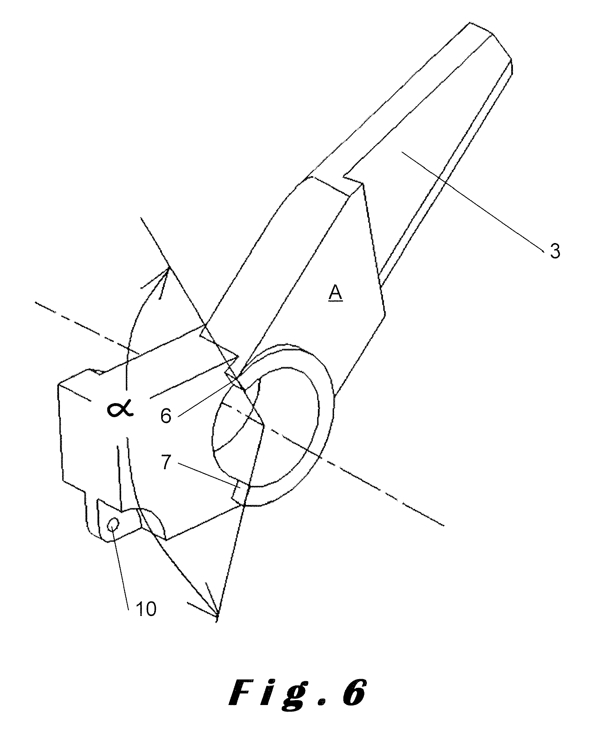

This is illustrated more in detail in figures 5 and 6 :

figure 6 shows a side (A) of one arm (a "next" arm as viewed from the side corresponding to the side of the arms visible on figures 1-4), and figure 5 shows a side (B) of an arm (a "previous" arm as viewed from the opposite side of the arms as visible in figures 1-4);

at least one abutment on side (A) cooperates with at least one abutment on each side (B), at an angle $\theta$fr of mutually free rotation with respect to each other, and causes a "next" arm to rotate together with a "previous" arm when said "previous" is rotated beyond this angle $\theta$fr;

in fact, in the specific embodiment of the invention shown in the figures, each first side (A) comprises two abutments (6) and (7) at a mutual angle $\alpha$ around said common hinging axis 5 of said arms and each second side (B) two abutments (8) and (9) at a mutual angle $\beta$ around said common hinging axis 5 of said arms, whereas the difference $\alpha$ - $\beta$ corresponds to the angle of mutually free rotation $\theta$fr of two successive arms with respect to each other beyond which further rotation of the arm causes the rotation of a facing arm;

in this specific case the angle $\theta$fr of mutually free rotation of two successive arms with respect to each can be grossly half of the angle $\theta$sp between the rest position and the separating/supporting position.

The successive arms automatically tend back to their rest position by suitable "return" or "drawn-back" means (such as spring means, counterweight means or any other similar means well known per se to the skilled art person, not represented on the figures), for instance connected to a connection point (10) on the arms 3.

Further abutments and/or stops may be foreseen, for instance between the arms and the shaft 4, in ways which are well known per se in the art, to adequately delimit the various positions of the arms and thus contribute to the proper operation of the method and the device according to the invention.

Thus, for instance, suitable provisions ensure that the first arm of the plurality of successively actionable, mutually interconnecting arms 3 stands out in the intermediate position 3ip even when no part has been previously loaded on the device.

When operating the method and the device according to the invention, an essentially flat part 2 (such as an essentially flat body or other part for the automobile construction) is loaded manually or automatically (by means of a robot) in the load direction as illustrated by the evolution from figure 1 to figure 2.

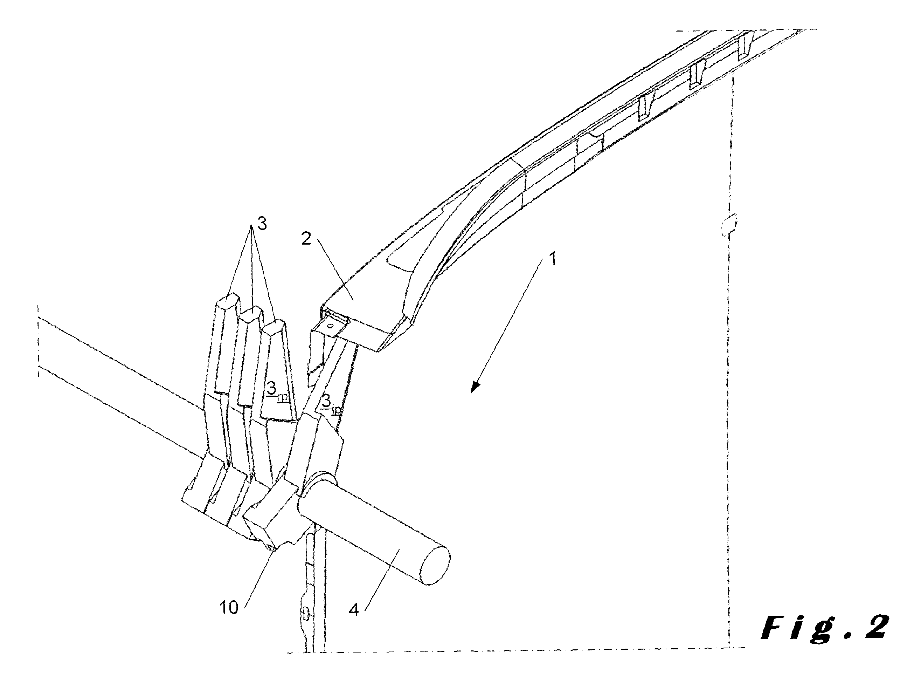

The part 2 is moved until it touches the arm 3 standing out in intermediate 3ip (as illustrated in figure 2), then it is dropped or moved downward, moving said arm in intermediate position 3ip to its separating/supporting position 3sp (as illustrated in figure 3), at the same time bringing the next arm from rest position 3rp (as illustrated in figure 2) to intermediate position (as illustrated in figure 3).

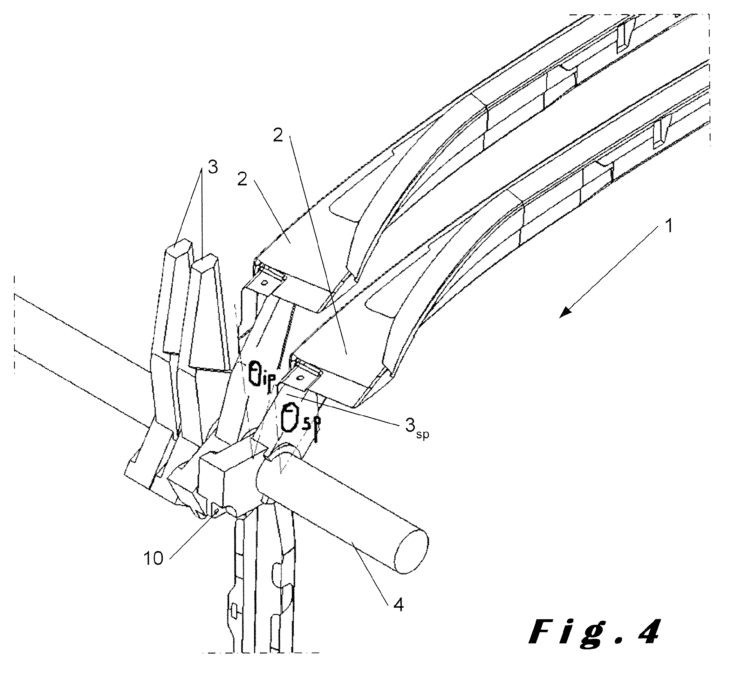

The weight of the part 2 keeps the arm on which it rests in separating/supporting position 3sp, and the next arm in intermediate position 3ip. The (next) arm in intermediate position prevents part 2 from moving or falling in unload-direction. For loading the next part 2, the same sequence of operations is repeated (as illustrated by figure 4, corresponding to the sequence step of figure 2).

When unloading, the part 2 is moved upward, bringing the arm under the part in intermediate position 3ip and the arm in front of the part back from intermediate position into rest position (thanks to the action of the spring, counterweight or other "return" means not illustrated)

It should be observed that many modifications with respect to the features specifically disclosed in the embodiment described here above, by way of non limiting example, will be readily thought of by the persons skilled in the art without departing from the essence of the invention as defined in the attached set of claims.

**Claims**

1.  Automatically actionable means for laterally supporting and/or separating successive piece goods comprising a plurality of successively actionable, mutually interconnecting arms, **characterized in that** said plurality of arms are hingedly provided around a common axis, each arm comprising a first side (A) and a second side (B), with side (A) of each arm facing side (B) of an adjoining arm, and each side (A) comprising at least one abutment cooperating with at least one abutment of each side (B) at an angle $\theta fr$ of mutually free rotation of two successive arms with respect to each other around said common hinging axis, beyond which further rotation of the arm causes the rotation of a facing arm, whereas each arm comprises a rest position and a separating/supporting position at an angle $\theta sp$ from said rest position, and an intermediate position at an angle $\theta ip = \theta sp - \theta fr$ from said rest position.

2.  Automatically actionable means according to claim 1, **characterised in that** each first side (A) comprises two abutments at a mutual angle $\alpha$ around said common hinging axis of said arms and each second side (B) two abutments at a mutual angle $\beta$ around said common hinging axis of said arms, whereas the difference $\alpha$-$\beta$ defines the angle of mutually free rotation $\theta fr$ of two successive arms with respect to each other beyond which further rotation of the arm causes the rotation of a facing arm.

3.  Automatically actionable means according to any one of claim 1 and 2, **characterized in that** the angle $\theta fr$ of mutually free rotation of two successive arms with respect to each is substantially half of the angle $\theta sp$ between the rest position and the separating/supporting position.

4.  Method for positioning and supporting essentially flat piece goods in a mutually separated manner, in view of their transport and/or storing, which method involves sequentially positioning said goods on a transport and/or storing surface and suitably interposing separating and/or supporting means between said successive essentially flat piece goods, **characterized in that** essentially flat piece goods comprising at least one projection are positioned in essentially vertical direction, whereas when positioning each such flat piece good on said transport and/or storing surface said at least one projection cooperates with a separating and supporting means according to any one of claim 1 - 3.

5.  Device for positioning and supporting essentially flat piece goods in a mutually separated manner in essentially vertical position on a support surface, in view of their transport and/or storing, comprising separating and/or supporting means capable to be interposed between said successive flat goods to provide lateral support to such essentially vertically positioned flat goods, **characterised in that** said separating and/or supporting means comprise automatically actionable means according to any one of claims 1 - 3.

2

3

1

3

$3_{rp}$

$3_{ip}$

$0_{ip}$

5

10

4

*F i g . 1*

Fig. 2

*Fig. 3*

*Fig. 4*

EP 1 810 939 A1

3

8

10

B

9

β

*Fig.5*

**Fig. 6**

**European Patent Office**

**EUROPEAN SEARCH REPORT**

Application Number

EP 06 10 0759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/131441 A1 (KESSLER MARTY) 8 July 2004 (2004-07-08) * figures 4,6,8 * ----- | 1-5 | INV. B65G1/20 B65D19/44 |
| A | DE 298 17 110 U1 (WEIDNER, WOLFGANG, DIPL.-ING. , 85107 BAAR-EBENHAUSEN, DE) 24 December 1998 (1998-12-24) * page 4, paragraph 6; claim 1; figures 1-3 * ----- | 1-5 | |
| A | EP 0 601 425 A (CROON & LUCKE MASCHINENFABRIK GMBH) 15 June 1994 (1994-06-15) * figures 1-4 * ----- | 1-5 | |

**TECHNICAL FIELDS SEARCHED (IPC)**

B65G
B65D
B62B
B62D

The present search report has been drawn up for all claims

| Place of search | Date of completion of the search | Examiner |
|---|---|---|
| Munich | 21 June 2006 | Sundqvist, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 10 0759

This annex lists the patent family members relating to the patent documents cited in  the above-mentioned European search report.
The members are as contained in the European Patent Office EDP file on
The European Patent Office is in no way liable for these particulars which are merely  given for the purpose of information.

21-06-2006

| Patent document cited in search report | | Publication date | Patent family member(s) | | Publication date |
|---|---|---|---|---|---|
| US 2004131441 | A1 | 08-07-2004 | NONE | | |
| DE 29817110 | U1 | 24-12-1998 | NONE | | |
| EP 0601425 | A | 15-06-1994 | DE | 9216612 U1 | 01-04-1993 |
| | | | JP | 6297062 A | 25-10-1994 |

For more details about this annex : see Official Journal of the European Patent Office, No. 12/82

EPO FORM P0459